# EUROPÄISCHE PATENTSCHRIFT

(11) **EP 3 030 758 B1**
(45) Veröffentlichungstag und Bekanntmachung des Hinweises auf die Patenterteilung: **05.06.2019**
(21) Anmeldenummer: 14736689.2
(22) Anmeldetag: 27.06.2014
(51) Int. Cl.: F01L 1/047, F16H 53/02

(54) **VORRICHTUNG ZUR MONTAGE VON NOCKEN AUF EINEM NOCKENWELLENROHR**
DEVICE FOR ASSEMBLING CAMS ON A CAMSHAFT PIPE
DISPOSITIF DE MONTAGE DE CAMES SUR UN TUBE D'ARBRE À CAMES

(30) Priorität: 08.08.2013 DE 102013215711
(43) Veröffentlichungstag der Anmeldung: 15.06.2016
(73) Patentinhaber: Mahle International GmbH, 70376 Stuttgart (DE)
(72) Erfinder: DAUTEL, Frank, 70839 Gerlingen (DE); FLENDER, Thomas, 71735 Eberdingen (DE); MENONNA, Antonio, 71254 Ditzingen (DE); STEICHELE, Stefan, 70839 Gerlingen (DE)
(74) Vertreter: BRP Renaud & Partner mbB Rechtsanwälte Patentanwälte Steuerberater
(86) Internationale Anmeldenummer: PCT/EP2014/063673
(87) Internationale Veröffentlichungsnummer: WO 2015/018563

(56) Entgegenhaltungen:
- EP-A1- 0 931 604
- WO-A2-2013/048166
- DE-B3-102004 060 807
- JP-A- S5 154 115
- JP-A- S6 297 722
- JP-A- S6 297 722
- JP-A- 2000 073 709

## Beschreibung

Die vorliegende Erfindung betrifft eine Vorrichtung zur Montage von Nocken auf einem Nockenwellenrohr einer Nockenwelle mit zumindest einem ersten Greifer und einem zweiten Greifer zum Greifen und Halten der Nocken während des Montagevorgangs gemäß dem Oberbegriff des Anspruchs 1. Die Erfindung betrifft außerdem ein Verfahren zum thermischen Fügen von Nocken auf einem Nockenwellenrohr unter Verwendung einer solchen Vorrichtung sowie einen zweiten Greifer für eine derartige Vorrichtung.

Gattungsgemäße Vorrichtungen sind hinlänglich bekannt und werden industriell bereits seit langem zum automatisierten Fertigen von Nockenwellen eingesetzt. Nachteilig bei den bekannten Vorrichtungen ist jedoch, dass aufgrund der Greifer sämtliche Nocken in gleicher Weise gegriffen und durch ein Drehen des Nockenwellenrohrs in entsprechender Winkellage auf dieser fixiert werden müssen. Hierdurch ist üblicherweise ein lediglich sequentielles Fügen der Nocken auf dem Nockenwellenrohr möglich.

Aus der JP 2000-073709 A ist eine Vorrichtung zur Montage von Nocken auf einem Nockenwellenrohr einer Nockenwelle bekannt, mit zumindest einem ersten Greifer und einem zweiten Greifer zum Greifen und Halten der Nocken während des Montagevorgangs, wobei zumindest zwei Greifer aus derselben Richtung mit Nocken bestückbar und in derselben Richtung in eine Flucht zum Nockenwellenrohr verfahrbar sind.

Auch aus der JP S62 97722 A ist eine Vorrichtung zur Montage von Nocken auf einem Nockenwellenrohr einer Nockenwelle bekannt.

Die vorliegende Erfindung beschäftigt sich daher mit dem Problem, für eine Vorrichtung der gattungsgemäßen Art eine verbesserte Ausführungsform anzugeben, die sich insbesondere durch eine rationalisierte Betriebsweise auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer an sich bekannten Vorrichtung zur Montage von Nocken auf einer Nockenwelle bzw. einem Nockenwellenrohr zwei unterschiedliche Greifer zum Greifen und Halten der Nocken während des Montagevorgangs vorzusehen, wobei diese beiden Greifer aus derselben Richtung mit Nocken bestückbar und in derselben Richtung in eine Flucht zu dem Nockenwellenrohr verfahrbar sind und wobei der zweite Greifer ein um 90° zum ersten Greifer verdrehtes Greifen eines Nockens ermöglicht. Hierdurch ist es erstmals möglich, die bisher übliche sequentielle Montage der Nocken durch einen einzigen Arbeitsschritt zu ersetzen, bei dem vorteilhafter Weise alle, zumindest aber zwei Nocken idealerweise hinsichtlich ihrer Flucht und hinsichtlich ihrer richtigen Winkelausrichtung vorpositioniert werden. Mit bisherigen Greifern, die üblicherweise zwei gegeneinander verfahrbare Backen aufwiesen, ist ein zuverlässiges Greifen des Nockens nur dann möglich, wenn dieser an seinen Längsseiten gegriffen werden kann. Bei der sequentiellen Montage der Nocken ist ein Verdrehen des Nockenwellenrohrs erforderlich, um die Nocken in ihrer richtigen Winkelposition auf dem Nockenwellenrohr zu montieren. Mit den bisher üblichen Greifern ist ein um 90° verdrehtes Greifen der Nocken nicht möglich, vielmehr müssten dazu die bisherigen Greifer um 90° versetzt an der Vorrichtung angeordnet werden, was jedoch aus Platzgründen nicht gewünscht ist. Idealerweise möchte man sämtliche Greifer in einer Flucht anordnen, da versetzt angeordnete Greifer viel Bauraum benötigen. Mit der erfindungsgemäßen Vorrichtung ist es zudem möglich, Nocken auch in Bezug auf einen Lagerrahmen bzw. in einem Haubenmodul, bei dem im Zweifelsfall die Zugänglichkeit von nur einer Seite aus gegeben ist, zu ermöglichen. Erfindungsgemäß weist der zweite Greifer der Vorrichtung eine U-förmige Aufnahme sowie einen relativ dazu axial und radial verfahrbaren und ebenfalls U-förmigen Halter auf, wobei zwei weitere Kontaktkörper an dem U-förmigen Halter angeordnet sind und wobei der Nocken während der Montage auf dem Nockenwellenrohr zwischen den vier Kontaktkörpern des zweiten Greifers eingeklemmt ist. Mit der erfindungsgemäßen Vorrichtung ist es somit erstmals möglich, die Montage von Nocken auf einem Nockenwellenrohr winkelversetzt durch unterschiedliche Greifer zu bewirken, wobei die zumindest zwei unterschiedlichen Greifer aus derselben Richtung mit Nocken bestückbar sind. Durch dieselbe Bestückungsrichtung und die gleiche Verfahrbarkeit ist somit auch ein Fügen einer Nockenwelle in einem Haubenmodul oder einem Lagerrahmen möglich, bei welchem ausschließlich eine Zugänglichkeit von einer Seite aus gegeben ist.

Gemäß einer bevorzugten Ausführungsform weist der erste Greifer zwei gegeneinander verfahrbare Backen auf, die den zu greifenden Nocken zwischen sich einklemmen, wobei an jedem der Backen zwei Kontaktkörper angeordnet sind. Diese beiden Backen werden zum Aufnehmen auseinander gefahren und zum Fixieren des Nockens unter Einklemmen desselben dazwischen gegeneinander verspannt. Üblicherweise sind dabei an den beiden Backen Kontaktkörper angeordnet, die eine vergleichsweise geringe wärmeübertragende Kontaktfläche mit dem gegriffenen Nocken bewirken, so dass der zum thermischen Fügen erhitzte Nocken keinen unerwünscht hohen Wärmeabfluss über den ersten Greifer erfährt.

Zweckmäßig sind der U-förmige Halter und die U-förmige Aufnahme gleich ausgerichtet, wobei im Bereich der freien Enden der beiden U-Schenkel des U-förmigen Halters ebenfalls Kontaktkörper vorgesehen sind, die jedoch in Richtung der U-förmigen Aufnahme über den Halter überstehen und somit bei axial zur U-förmigen Aufnahme verstelltem Halter ein Einlegen des Nockens und bei einem Zusammenfahren des Halters auf die Aufnahme ein Fixieren des Nockens im zweiten Greifer ermöglichen. Mit dem zweiten Greifer ist somit die Fixierung des zu fügenden Nockens mit liegendem Nockenberg möglich, wogegen mit dem ersten Greifer ein - stehendes mit nach oben oder nach unten ausgerichtetem Nockenberg - Greifen und Fixieren des Nockens möglich ist.

Die Erfindung beruht weiter auf dem allgemeinen Gedanken, die zuvor beschriebene Vorrichtung zum thermischen Fügen von Nocken auf einem Nockenwellenrohr zu verwenden, wobei hierzu zunächst zumindest zwei benachbarte Nocken erhitzt werden. Anschließend wird einer der beiden Nocken in den ersten Greifer und der andere Nocken um 90° verdreht in den zweiten Greifer gelegt. Die beiden Greifer können dabei bereits fluchtend zum Nockenwellenrohr ausgerichtet sein oder aber in die Flucht zu diesem Verfahren werden. Anschließend wird das Nockenwellenrohr durch die beiden Nocken geschoben und solange gewartet, bis die beiden Nocken durch einen Temperaturausgleich auf das Nockenwellenrohr aufgeschrumpft und dadurch fixiert sind. Mit der erfindungsgemäßen Vorrichtung ist es somit möglich, zwei Nocken parallel zu montieren, wodurch eine Rationalisierung des Montageprozesses erreicht werden kann. Sind die beiden Greifer nicht ohnehin fluchtend zu dem Nockenwellenrohr ausgerichtet, so können diese vor dem Verfahren des Nockenwellenrohrs in Flucht zu diesem ausgerichtet, beispielsweise gegen einen Anschlag gefahren werden.

Die vorliegende Erfindung beruht weiter auf dem allgemeinen Gedanken, einen derartigen zweiten Greifer mit einer U-förmigen Aufnahme sowie einem relativ dazu axial und radial verfahrbaren und ebenfalls U-förmig ausgebildeten Halter vorzusehen, um mittels eines derartigen zweiten Greifers rein theoretisch auch herkömmliche Vorrichtungen im Sinne der Erfindung nachzurüsten. Mit einem derartigen zweiten Greifer und zumindest einem ursprünglich bereits vorgesehenen ersten Greifer lässt sich eine besonders platzsparende und bauraumoptimierte Vorrichtung erreichen, die insbesondere auch für die Montage von Nockenwellen in Haubenmodulen oder Lagerrahmen geeignet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine erfindungsgemäße Vorrichtung zur Montage von Nocken in einem Nockenwellenrohr einer Nockenwelle beim Einbau der Nockenwelle in einen Lagerrahmen bzw. eine Zylinderkopfhaube,
- Fig. 2: eine Darstellung wie in Fig. 1, jedoch bei einem späteren Verfahrensschritt,
- Fig. 3: die erfindungsgemäße Vorrichtung bei der Montage von Nocken auf ein Nockenwellenrohr der Nockenwelle,
- Fig. 4: eine Darstellung einer möglichen Ausführungsform eines ersten Greifers der erfindungsgemäßen Vorrichtung,
- Fig. 5: zwei perspektivische Ansichten eines zweiten Greifers der Vorrichtung,
- Fig. 6a,b: eine Seitenansicht des zweiten Greifers bei unterschiedlich verfahrenem U-förmigen Halter,

Fig. 7a,b eine Darstellung wie in Fig. 6, jedoch bei schräg verfahrbarem Halter.

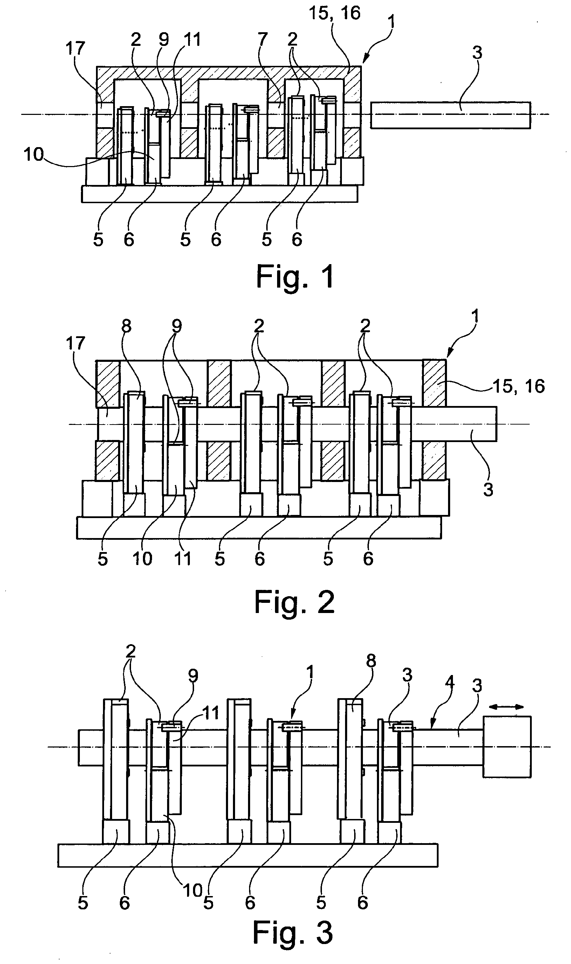

Entsprechend den Fig. 1 bis 3, weist eine erfindungsgemäße Vorrichtung 1 zur Montage von Nocken 2 auf einem Nockenwellenrohr 3 einer Nockenwelle 4 zumindest einen ersten Greifer 5 sowie einen zweiten Greifer 6 zum Greifen und Halten der Nocken 2 während des Montagevorgangs auf. Die Vorrichtungen 1 gemäß den Fig. 1 bis 3 weisen dabei jeweils drei erste Greifer 5 und drei zweite Greifer 6 auf. Sämtliche Greifer 5, 6 sind dabei aus derselben Richtung, gemäß den Fig. 1 bis 3 von oben, mit Nocken 2 bestückbar und in derselben Richtung in eine Flucht zum Nockenwellenrohr 3 verfahrbar. In dem gezeigten Fall können die einzelnen Greifer 5, 6 vertikal derart verstellt werden, dass die in den Greifern 5, 6 fixierten Nocken 2 mit ihrer Nockenbohrung 7 fluchtend zum Nockenwellenrohr 3 ausgerichtet sind. Erfindungsgemäß ist nun der zweite Greifer 6 in der Lage, einen Nocken 2 um 90° verdreht zu dem im ersten Greifer 5 gehaltenen Nocken 2 zu halten. Hierdurch ist nicht nur eine besonders bauraumoptimierte Bauweise der Vorrichtung 1, sondern auch ein vergleichsweise schnelles Montieren der Nocken 2 auf dem Nockenwellenrohr 3 möglich.

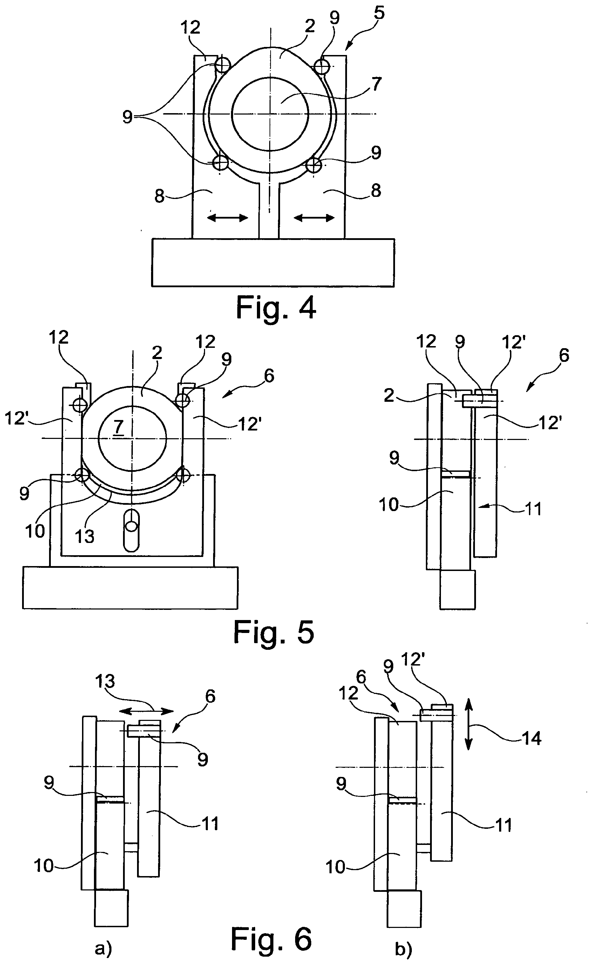

Betrachtet man den ersten Greifer 5, wie dieser gemäß der Fig. 4 dargestellt ist, so kann man an diesem zwei gegeneinander verfahrbare Backen 8 erkennen, die den zu greifenden Nocken 2 zwischen sich einklemmen. An jedem der Backen 8 sind dabei zwei Kontaktkörper 9 angeordnet, die beim Greifen des Nockens 2 einen lediglich geringen mechanischen Kontakt zu diesem herstellen und dadurch eine mögliche Wärmeübertragung minimieren. Das Minimieren der Wärmeübertragung ist insbesondere erforderlich, um die für das thermische Fügen erhitzten Nocken 2 im Greifer 5, 6 nicht zu schnell abkühlen zu lassen.

Betrachtet man demgegenüber den zweiten Greifer 6, wie dieser gemäß den Fig. 5 und 6 dargestellt ist, so kann man erkennen, dass dieser eine U-förmige Aufnahme 10 sowie einen relativ dazu axial und radial verfahrbaren und ebenfalls U-förmigen Halter 11 aufweist. Dabei sind zwei Kontaktkörper 9 an der U-förmigen Aufnahme 10 und zwei weitere Kontaktkörper an dem U-förmigen Halter 11 angeordnet. Der U-förmige Halter 11 sowie die U-förmige Aufnahme 10 sind dabei gleich ausgerichtet, im vorliegenden Fall mit einem nach oben offenen U, wodurch ein Bestücken des zweiten Greifers 6 mit einem Nocken 2 von oben möglich ist. Die Kontaktkörper 9 der U-förmigen Aufnahme 10 sind dabei in einem Übergang zwischen den U-Schenkeln 12 und einem Grund 13 angeordnet. Die Kontaktkörper 9 am U-förmigen Halter 11 sind dabei im Bereich der freien Enden der U-Schenkel 12' des U-förmigen Halters 11 angeordnet und stehen in Richtung der U-förmigen Aufnahme 10 über den Halter 11 über. Generell können die Kontaktkörper 9 zylinderförmig, insbesondere als Rollenkörper, ausgebildet sein, wobei stets auf eine vergleichsweise geringe Kontaktfläche und damit einen geringen Wärmeübertrag zum Nocken 2 zu achten ist. Während der Montage des Nockens 2 auf dem Nockenwellenrohr 3 ist dieser zwischen den vier Kontaktkörpern 9 des zweiten Greifers 6 eingeklemmt.

Betrachtet man die Fig. 6a, so kann man an dieser erkennen, dass der U-förmige Halter 11 in Axialrichtung 13 relativ zur U-förmigen Aufnahme 10 verfahrbar ist, ebenso wie in Radialrichtung 14, wie dies gemäß der Fig. 6b dargestellt ist. Durch die axiale und radiale Verfahrbarkeit des Halters 11 ist ein Einlegen des Nockens 2 in die Aufnahme 10 problemlos möglich, wie dies gemäß der Fig. 6a dargestellt ist. Zum Fixieren des Nockens 2 in dem zweiten Greifer 6 wird anschließend der Halter 11 an die U-förmige Aufnahme 10 herangefahren, wodurch die an den U-Schenkeln 12' des Halters 11 angeordneten Kontaktkörper 9 über den zu greifenden Nocken 2 gefahren werden. Anschließend kann der Halter 11 noch in Radialrichtung etwas nach unten verfahren werden, wodurch ein Fixieren des Nockens 2 zwischen den nun insgesamt vier Kontaktkörpern 9 erzwungen wird.

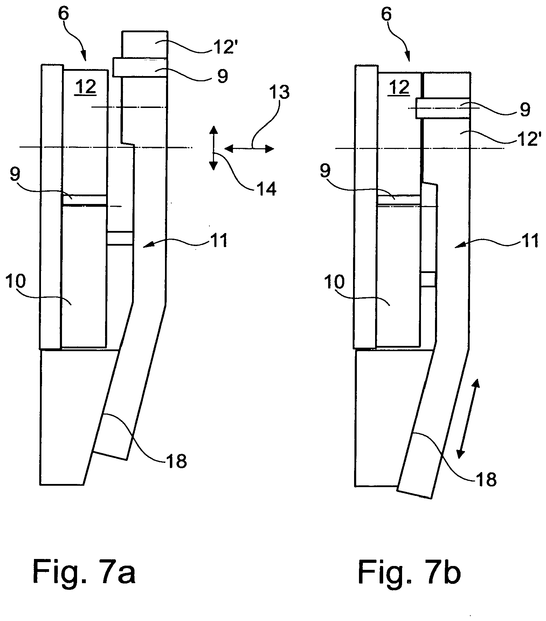

Betrachtet man die Fig. 7a,b, so kann man an dieser erkennen, dass an der U-förmigen Aufnahme 10 eine schiefe Ebene 18 angeordnet ist, über welche der U-förmige Halter 11 schräg zur U-förmigen Aufnahme 10, das heißt schräg zur Axialrichtung 13 und schräg zur Radialrichtung 14, verstellbar ist. Durch die schräge Verfahrbarkeit des Halters 11 kann eine gleichzeitige Bewegung des Halters 11 sowohl in Axialrichtung 13 als auch in Radialrichtung 14 erreicht werden, bis der Nocken 2 eingespannt ist.

Der erfindungsgemäße zweite Greifer 6 bietet dabei den großen Vorteil, dass er im Unterschied zu dem ersten Greifer 5 ein Greifen des Nockens 2 in liegendem Zustand, d.h. beispielsweise mit in einem Horizont liegenden Nockenwerk, ermöglicht, was mit dem ersten Greifer 5 nicht möglich ist, da dieser ein zuverlässiges Greifen des Nockens 2 lediglich an dessen Längsseiten erlaubt. Bei einer Vorrichtung 1 mit ausschließlich ersten Greifern 5, müssten diese um 90° verdreht zueinander angeordnet werden, wodurch die Vorrichtung 1 einen deutlich größeren Bauraum erfordert. Anderenfalls müssten spezielle Greifer verwendet werden, die ein Verdrehen des Nockens 2 zur Montage ermöglichen, was jedoch konstruktiv vergleichsweise aufwendig und dadurch teuer ist. Durch die erfindungsgemäße Kombination der ersten und zweiten Greifer 5, 6 können diese auf derselben Seite der Vorrichtung 1 angeordnet werden, was insbesondere auch eine Montage einer Nockenwelle 4 in einem Lagerrahmen 15 bzw. einer Zylinderkopfhaube 16 ermöglicht, bei welchen die Zugänglichkeit ausschließlich von einer Seite aus möglich ist.

Generell können die Nocken 2 auf dem Nockenwellenrohr 3 unter Verwendung der erfindungsgemäßen Vorrichtung 1 wie folgt montiert werden. Zunächst werden zumindest zwei benachbarte Nocken 2 erhitzt, wobei einer der beiden Nocken 2 in den ersten Greifer 5 und der andere Nocken 2 um 90° verdreht in den zweiten Greifer 6 gelegt werden. Anschließend werden die beiden Greifer 5, 6 in die Flucht zum Nockenwellenrohr 3 verfahren, so dass dieses durch die Nockenbohrungen 7 der Nocken 2 geschoben werden kann. Anschließend wird solange gewartet, bis die beiden Nocken 2 durch einen Temperaturausgleich auf das Nockenwellenrohr 3 aufgeschrumpft und dadurch fixiert sind.

Dabei ist möglich, dass die beiden Greifer 5, 6 erst kurz vor dem Erreichen der Fügeposition des Nockenwellenrohrs 3 in die Montageposition verfahren werden, so dass generell nie mehr als zwei nicht montierte Nocken 2 in einer Flucht mit dem Nockenwellenrohr 3 stehen. Soll die Nockenwelle 4 in einen Lagerrahmen 15 bzw. eine Zylinderkopfhaube 16 montiert werden, so kann diese zunächst derart positioniert werden, dass deren Öffnungen 17 mit dem Nockenwellenrohr 3 fluchten. Selbstverständlich muss dabei nicht wie in den Fig. 1 bis 3 gezeigt das Nockenwellenrohr 3 horizontal eingeschoben werden, sondern kann bei einer entsprechenden Ausrichtung der Vorrichtung 1 selbstverständlich auch vertikal eingeschoben werden.

## Patentansprüche

1. Vorrichtung (1) zur Montage von Nocken (2) auf einem Nockenwellenrohr (3) einer Nockenwelle (4), mit zumindest einem ersten Greifer (5) und einem zweiten Greifer (6) zum Greifen und Halten der Nocken (2) während des Montagevorgangs, wobei die zumindest zwei Greifer (5,6) aus derselben Richtung mit Nocken (2) bestückbar und in derselben Richtung in eine Flucht zu dem Nockenwellenrohr (3) verfahrbar sind, wobei der zweite Greifer (6) ein um 90° zum ersten Greifer (5) verdrehtes Greifen eines Nockens (2) ermöglicht,
**dadurch gekennzeichnet,**
- **dass** der zweite Greifer (6) eine U-förmige Aufnahme (10) sowie einen relativ dazu axial und radial verfahrbaren und ebenfalls U-förmigen Halter (11) aufweist,
- **dass** an der U-förmigen Aufnahme (10) zwei Kontaktkörper (9) angeordnet sind, auf denen der zu haltende Nocken (2) aufliegt,
- **dass** zwei weitere Kontaktkörper an dem U-förmigen Halter (11) angeordnet sind,
- der Nocken (2) während der Montage auf dem Nockenwellenrohr (3) zwischen den vier Kontaktkörpern (9) des zweiten Greifers (6) eingeklemmt ist.

2. Vorrichtung nach Anspruch 1,
**dadurch gekennzeichnet,**
**dass** der U-förmige Halter (11) und die U-förmige Aufnahme (10) gleich ausgerichtet sind, wobei im Bereich der freien Enden der U-Schenkel (12') des U-förmigen Halters (11) Kontaktkörper (9) angeordnet sind, die in Richtung der U-förmigen Aufnahme (10) über den Halter (11) überstehen.

3. Vorrichtung nach Anspruch 1 oder 2,
**dadurch gekennzeichnet,**
**dass** der erste Greifer (5) zwei gegeneinander verfahrbare Backen (8) aufweist, die den zu greifenden Nocken (2) zwischen sich einklemmen, wobei an jedem der Backen (8) zwei Kontaktkörper (9) angeordnet sind.

4. Vorrichtung nach einem der vorhergehenden Ansprüche,
**dadurch gekennzeichnet,**
**dass** die Kontaktkörper (9) zylinderförmig, insbesondere als Rollenkörper, ausgebildet sind.

5. Vorrichtung nach einem der Ansprüche 1 bis 4,
**dadurch gekennzeichnet,**
**dass** der U-förmige Halter (11) schräg zur U-förmigen Aufnahme (10) verstellbar ist.

6. Vorrichtung nach Anspruch 5,
**dadurch gekennzeichnet,**
**dass** an der U-förmigen Aufnahme (10) eine schiefe Ebene (18) angeordnet ist, über welche der U-förmige Halter (11) schräg zur U-förmigen Aufnahme (10) verstellbar ist.

7. Zweiter Greifer (6) für eine Vorrichtung nach einem der Ansprüche 1 bis 6, mit einer U-förmigen Aufnahme (10) sowie einem relativ dazu axial und radial verfahrbaren und ebenfalls U-förmigen Halter (11).

8. Greifer nach Anspruch 7,
**dadurch gekennzeichnet,**
- **dass** an der U-förmigen Aufnahme (10) zwei Kontaktkörper (9) angeordnet sind, auf denen der zu haltende Nocken (2) aufliegt, und/oder
- **dass** der U-förmige Halter (11) und die U-förmige Aufnahme (10) gleich ausgerichtet sind, wobei im Bereich der freien Enden der U-Schenkel (12') des U-förmigen Halters (11) Kontaktkörper (9) angeordnet sind, die in Richtung der U-förmigen Aufnahme (10) über den Halter (11) überstehen.

## Claims

1. Device (1) for mounting cams (2) on a camshaft tube (3) of a cam shaft (4), having at least one first gripper (5) and one second gripper (6) for gripping and holding the cams (2) during the mounting process, wherein the at least two grippers (5, 6) can be equipped from the same direction with cams (2) and are movable in the same direction into an alignment with the camshaft tube (3), wherein the second gripper (6) permits a gripping of a cam (2) twisted by 90° to the first gripper (5),
**characterised in**
- **that** the second gripper (6) has a U-shaped receptacle (10) and a holder (11), which is axially and radially movable relative thereto and is also U-shaped,
- **that** two contact bodies (9), on which the cam (2) to be held rests, are arranged on the U-shaped receptacle (10),
- **that** two further contact bodies are arranged on the U-shaped holder (11),
- the cam (2) is clamped during the mounting on the camshaft tube (3) between the four contact bodies (9) of the second gripper (6).

2. Device according to claim 1, second alternative,
**characterised in**
**that** the U-shaped holder (11) and the U-shaped receptacle (10) have the same orientation, wherein contact bodies (9), which project above the holder (11) in the direction of the U-shaped receptacle (10), are arranged in the area of the free ends of the U-limb (12') of the U-shaped holder (11).

3. Device according to claim 1 or 2
**characterised in**
**that** the first gripper (5) has two oppositely movable jaws (8), which clamp the cams (2) to be gripped between themselves, wherein two contact bodies (9) are arranged on each of the jaws (8).

4. Device according to any one of the preceding claims,
**characterised in**
**that** the contact bodies (9) are cylindrical in shape, in particular, are designed as roller bodies.

5. Device according to any one of claims 1 to 4,
**characterised in**
**that** the U-shaped holder (11) can be adjusted obliquely with respect to the U-shaped receptacle (10).

6. Device according to claim 5,
**characterised in**
**that** an inclined plane (18) is arranged on the U-shaped receptacle (10), via which inclined plane the U-shaped holder (11) can be adjusted obliquely with respect to the U-shaped receptacle (10).

7. Second gripper (6) for a device according to any one of claims 1 to 6, having a U-shaped receptacle (10) and a holder (11), which is axially and radially movable relative thereto and also U-shaped.

8. Gripper according to claim 7,
**characterised in**
- **that** two contact bodies (9) are arranged on the U-shaped receptacle (10), on which the cam (2) to be held rests,
and/or
- **that** the U-shaped holder (11) and the U-shaped receptacle (10) have the same orientation, wherein contact bodies (9), which project above the holder (11) in the direction of the U-shaped receptacle (10), are arranged in the area of the free ends of the U-limb (12') of the U-shaped holder (11).

## Revendications

1. Dispositif (1) servant au montage de cames (2) sur un tuyau d'arbre à cames (3) d'un arbre à cames (4), avec au moins un premier système de préhension (5) et un deuxième système de préhension (6) servant à saisir et à retenir les cames (2) au cours de l'opération de montage, dans lequel les au moins deux systèmes de préhension (5, 6) peuvent être équipés de cames (2) depuis la même direction et peuvent être déplacés dans la même direction en affleurement avec le tuyau d'arbre à cames (3), dans lequel le deuxième système de préhension (6) permet une préhension, tournée de 90° par rapport au premier système de préhension (5), d'une came (2),
**caractérisé en ce**
- **que** le deuxième système de préhension (6) présente un logement (10) en forme de U ainsi qu'un système de retenue (11) pouvant être déplacé par rapport à ce dernier de manière axiale et de manière radiale et également en forme de U,
- **que** sont disposés au niveau du logement (10) en forme de U deux corps de contact (9), sur lesquels repose la came (2) à retenir,
- **que** deux autres corps de contact sont disposés au niveau du système de retenue (11) en forme de U,
- la came (2) est enserrée au cours du montage sur le tuyau d'arbre à cames (3) entre les quatre corps de contact (9) du deuxième système de préhension (6).

2. Dispositif selon la revendication 1, deuxième alternative,
**caractérisé en ce**
**que** le système de retenue (11) en forme de U et le logement (10) en forme de U présentent la même orientation, dans lequel sont disposés des corps de contact (9) dans la zone des extrémités libres des branches en U (12') du système de retenue (11) en forme de U, qui dépassent du système de retenue (11) en direction du logement (10) en forme de U.

3. Dispositif selon la revendication 1 ou 2,
**caractérisé en ce**
**que** le premier système de préhension (5) présente deux mâchoires (8) pouvant être déplacées l'une contre l'autre, qui enserrent entre elles la came (2) à saisir, dans lequel deux corps de contact (9) sont disposés au niveau de chacune des mâchoires (8).

4. Dispositif selon l'une quelconque des revendications précédentes,
**caractérisé en ce**
**que** les corps de contact (9) sont réalisés en forme de cylindre, en particulier en tant que corps de rouleau.

5. Dispositif selon l'une quelconque des revendications 1 à 4,
**caractérisé en ce**
**que** le système de retenue (11) en forme de U peut être ajusté de manière oblique par rapport au logement (10) en forme de U.

6. Dispositif selon la revendication 5,
**caractérisé en ce**
**qu'**est disposé au niveau du logement (10) en forme de U un plan (18) incliné, par l'intermédiaire duquel le système de retenue (11) en forme de U peut être ajusté de manière oblique par rapport au logement (10) en forme de U.

7. Deuxième système de préhension (6) pour un dispositif selon l'une quelconque des revendications 1 à 6, avec un logement (10) en forme de U ainsi qu'un système de retenue (11) pouvant être déplacé par rapport à ce dernier de manière axiale et de manière radiale et également en forme de U.

8. Système de préhension selon la revendication 7,
**caractérisé en ce**
- **que** sont disposés au niveau du logement (10) en forme de U deux corps de contact (9), sur lesquels repose la came (2) à retenir,
et/ou
- **que** le système de retenue (11) en forme de U et le logement (10) en forme de U présentent la même orientation, dans lequel sont disposés des corps de contact (9) dans la zone des extrémités libres des branches en U (12') du système de retenue (11) en forme de U, qui dépassent du système de retenue (11) en direction du logement (10) en forme de U.
